# EUROPEAN PATENT APPLICATION

(11) **EP 4 207 039 A1**
(43) Date of publication of application: **05.07.2023**
(21) Application number: 21861638.1
(22) Date of filing: 25.08.2021
(51) Int. Cl.: G06Q 40/06

(54) **INFORMATION PROCESSING DEVICE, METHOD FOR CONTROLLING INFORMATION PROCESSING DEVICE, AND PROGRAM**

(30) Priority: 27.08.2020 JP 2020143328
(71) Applicant: Kotaeru Holdings Inc., Tokyo 100-6390 (JP)
(72) Inventor: MATSUDA Yoshinari, Tokyo 100-6326 (JP)
(74) Representative: Murgitroyd & Company
(86) International application number: PCT/JP2021/031229
(87) International publication number: WO 2022/045215

(57) **Abstract**

Means that enables improvements in the utilization of assets in trust is provided. Included are storage means for storing trust information, investment information, and financing information, the trust information being information relating to a share option that has been entrusted from a settlor to a trustee, the investment information being information relating to an investment item, the financing information being information relating to financing of money to be invested in the investment item; reading means for reading authorized person information, the investment information that has been stored in the storage means, and the financing investment information that has been stored in the storage means, the authorized person information being included in the trust information that has been stored in the storage means, the authorized person information being information relating to an authorized person that has authority that enables borrowing or investment to be carried out on security of the share option; inquiry means for inquiring of the authorized person whether the borrowing or the investment will be carried out, the authorized person being specified by an authorized person ID included in the authorized person information that has been read by the reading means; response reception means for receiving a response to an inquiry that has been made by the inquiry means; and information provision means for providing the financing information or the investment information that has been read by the reading means, to the authorized person that has made the response that has been received by the response reception means, the response indicating that the borrowing or the investment will be carried out.

## Description

### Technical Field

The present invention relates to an information processing apparatus, a control method of the information processing apparatus, and a program.

### Background Art

Conventionally, a stock option (referred to as a "share option") by which a right to buy a company's stock at an exercise price is granted to executives, employees, or the persons concerned of the company (hereinafter referred to as "employees or the like") is known. In the share option, as the stock price of the company's stock rises over the exercise price, profits increase, and therefore the employees or the like that have been given the share option make an effort to increase the value of the company in order to raise the stock price.

Patent Literature 1 discloses that a securities firm funds the employees or the like that have been given the share option, as measures against a failure of the employees or the like to exercise the share option due to a failure to prepare funds at the exercise price. According to this, the employees or the like that have failed to exercise a right due to insufficient funds receive financing, and therefore the exercise of the right can be promoted.

### Citation List

### Patent Literature

Patent Literature 1: JP 2005-56095 A

### Summary of Invention

### Technical Problem

Today, it is general that financing is provided in a case where the employees or the like that have already had the share option fail to prepare funds at the exercise price, as disclosed in Patent Literature 1. As capital gains at a time when the share option has been exercised, a stock has been acquired, and the stock has been sold, a great profit can be earned by acquiring a stock of a company at a stock price at the time of a low stock price (for example, a time when the company has not been listed on the stock market), and selling the stock of the company at the time of a high stock price (for example, after the company has been listed on the stock market). Therefore, employees or the like that have been given a share option of a not-yet-listed company exercise the share option at a point in time when the company has been listed, and can earn a great profit. However, in order to exercise the share option, it is requested that a right exercise value of the share option be paid, and it has been difficult to allocate its capital gains to another investment until then. The similar is applied to other assets that request that a right exercise value be paid in order to exercise a right, such as a call option.

Meanwhile, conventionally, in issuing the share option, it has been requested that grant target persons and the number of share options to be granted to the grant target persons be confirmed. If the share option that will produce value in the future, as described above is granted to the employees or the like in a situation where an actual degree of contribution, or the like has not been confirmed, this has caused a harmful influence in which the employees or the like are discouraged from working hard, or contributions are not recognized as much as a management team has expected, in some cases. However, recently, a scheme of temporarily entrusting the share option to a trustee of trust, and delivering the share option to the employees or the like after the degree of contribution to the company, or the like has been confirmed, what is called a "trust type stock option", has been rising. However, in the case of the trust type stock option, due to the nature, during a period until persons are confirmed who will finally become beneficiaries to receive delivery of the share option from among the employees or the like, even if a right exercise period has expired as the content of the share option itself, the employees or the like fail to exercise the share option, or fail to sell a stock acquired according to the share option, and the employees or the like lose an opportunity of moneymaking relating to unrealized gains of the share option.

Similarly, in the case of a trust for which a beneficiary has not been specified or a trust for which the beneficiary have been specified, but conditions have not yet been fulfilled, a procedure in a case where a trustee receives borrowing on the security of trust assets has, for example, a need of confirming the intention of a settlor or a trust administrator, and is more complicated than a procedure in a case where a holder of the share option directly receives borrowing on the basis of the issued share option. In a case where an investment based on borrowed funds should fall below par of the principal in the future, only borrowed money remains. Even if the beneficiary is specified or the conditions are fulfilled later, there is a unique element to be considered, such as a possibility of the refusal of the beneficiary, and it has been difficult to perform processing by using a system. Furthermore, in a case where the beneficiary has been specified, and specified conditions have not been set, but it is impossible or significantly difficult for the beneficiary to determine intention, or in other cases, similar difficulties have been caused.

The present invention has been made in order to solve the problems described above, and it is an object of the present invention to provide means that enables improvements in the utilization of assets in trust.

### Solution to Problem

The present invention is an information processing apparatus including: storage means for storing trust information, investment information, and financing information, the trust information being information relating to a share option that has been entrusted from a settlor to a trustee, the investment information being information relating to an investment item, the financing information being information relating to financing of money to be invested in the investment item; reading means for reading authorized person information, the investment information that has been stored in the storage means, and the financing investment information that has been stored in the storage means, the authorized person information being included in the trust information that has been stored in the storage means, the authorized person information being information relating to an authorized person that has authority that enables borrowing or investment to be carried out on security of the share option; inquiry means for inquiring of the authorized person whether the borrowing or the investment will be carried out, the authorized person being specified by an authorized person ID included in the authorized person information that has been read by the reading means; response reception means for receiving a response to an inquiry that has been made by the inquiry means; and information provision means for providing the financing information or the investment information that has been read by the reading means, to the authorized person that has made the response that has been received by the response reception means, the response indicating that the borrowing or the investment will be carried out.

### Advantageous Effects of Invention

According to the present invention, means that enables improvements in the utilization of assets in trust is provided.

### Brief Description of Drawings

Fig. 1 is a block diagram explaining an outline of an operation of a share option administration system according to a first embodiment of the present invention.
Fig. 2 is a block diagram illustrating a general configuration of a share option administration system 50 according to the first embodiment of the present invention.
Fig. 3 is a block diagram illustrating a configuration of each information processing apparatus illustrated in Fig. 2.
Fig. 4 is a diagram illustrating an example of trust information that is stored in a storage 103 of an information processing apparatus 16a illustrated in Fig. 2.
Fig. 5 is a diagram illustrating examples of investment information and financing information that are stored in the storage 103 of the information processing apparatus 16a illustrated in Fig. 2.
Fig. 6 is a flowchart illustrating processing performed by the share option administration system 50.

### Description of Embodiments

An embodiment of an information processing apparatus, a control method of the information processing apparatus, and a program according to the present invention is described below with reference to the drawings.

### [First Embodiment]

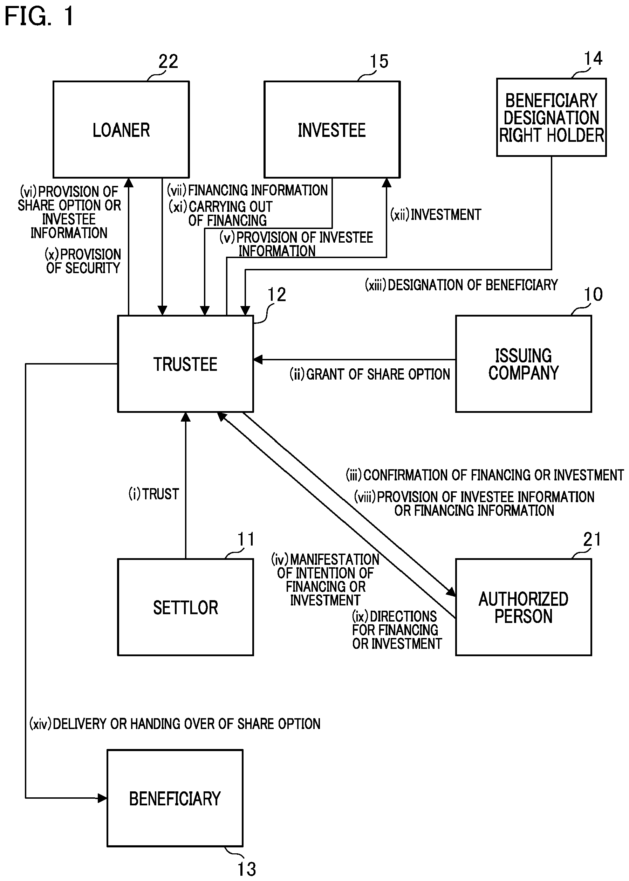

Fig. 1 is a block diagram explaining an outline of an operation of a share option administration system according to a first embodiment of the present invention. First, a scheme relating to administration in trust of a share option according to the present embodiment is described with reference to Fig. 1.

Note that in the present embodiment, a case where the share option is administrated by using trust is described, but the present invention can also be applied to a case where another right has been held in trust. For example, the present invention can also be applied to a call option administration system that administrates a call option, which is a right that enables a stock to be acquired at a right exercise price. The share option is a right that enables a stock to be acquired from an issuing company according to a current right exercise value, and the call option is a right that enables a stock to be acquired from a stockholder rather than the issuing company at the right exercise price. A counterparty to be claimed is different. In the case of the call option, an administration system relates to a scheme in which a principal stockholder (normally, an owner-manager) entrusts the call option in order to transfer shares of the principal stockholder to a contributor in the future (in some cases, the call option is entrusted, and in other cases, money is entrusted, and the principal stockholder causes a trustee to make a payment in order to cause the trustee to acquire the call option that has been set by the principal stockholder). Furthermore, the present invention can also be applied to a virtual currency administration system that administrates virtual currency. The virtual currency is issued by an issuer, and generally has a higher value due to higher liquidity. Therefore, the virtual currency has a need of being distributed to influencers or companions (including executives or the like of a juridical person that issues the virtual currency), and being frequently transacted at a virtual currency exchange. In the case of the virtual currency, an administration system relates to a scheme in which the issuer or a person who has much virtual currency entrusts their own virtual currency in order to transfer the virtual currency to a contributor in the future (in some cases, the virtual currency is entrusted, and in other cases, money or other assets are entrusted, and a trustee is caused to acquire the virtual currency from a settlor or another third party). Moreover, the present invention can be applied to a limited liability company or a partnership that is the basis of an investment fund, or a fund share administration system that administrates a share of trust. Normally, fund shares are held by general partners, limited partners, or the like that have formed an investment fund. For example, there is a need of enabling all or some of these shares to be transferred to members or a professional manager that is dispatched to an investee in the future to enhance commitment of the members, the professional manager, or the like in order to improve the enterprise value of the investee of the investment fund. In the case of the fund shares, an administration system relates to a scheme in which a person who has a fund share entrusts the fund share of the person in order to transfer the fund share to a contributor in the future (in some cases, the fund share is entrusted, and in other cases, money or other assets are entrusted, and a trustee is caused to acquire the fund share).

An issuing company 10 is a company that issues a share option that is a target in the share option administration system according to the present embodiment. A settlor 11 is, for example, a manager or a stockholder of the issuing company 10. Note that the issuing company 10 may make a contribution. A trustee 12 is a trustee of trust, and is a person who administrates or operates trust assets.

The settlor 11 entrusts money or other assets to the trustee 12. In creating a trust, generally, a specific beneficiary is determined. However, in some cases, (1) the specific beneficiary is not determined, and a method for determining the beneficiary is determined, and in other cases, (2) the specific beneficiary is determined, a right as the beneficiary is acquired, and conditions for confirming the beneficiary (hereinafter referred to as "right confirmation conditions") are set. Conventionally, in a case where the share option is administrated in trust, a trust administrator who has authority to conduct any and all judicial or extra-judicial acts on behalf of a beneficiary in its own name in connection with a right of the beneficiary in the absence of the beneficiary, or a trust supervisor or another beneficiary's agent who has authority to conduct specified acts on behalf of the beneficiary in its own name in the case of the presence of the beneficiary has comprehensive authority to give directions relating to acts required to administrate trust assets on behalf of the beneficiary, and in some cases, a person specified by a trust contract or the like has these authorities. Accordingly, it is assumed that an authorized person 21 has authority in connection with borrowing or investment from among these authorities.

In the present embodiment, as an example of a trust in which the specific beneficiary is not determined, and a method for determining the beneficiary is determined, a trust type share option (market-value-issue share option trust (registered trademark)) is a target. In the trust type share option, an exercise price (or its calculation formula) is determined at the time of issue. A fixed number of share options themselves are temporarily granted to a trustee in trust, but executives or the like are not specifically determined to be a grant target person, or the number of share options to be granted to the grant target person is not determined (a first trust). Then, a beneficiary designation right holder 14, who is a person that has been determined as a beneficiary designation right holder by the settlor 11 (in some cases, the issuing company 10, the settlor 11, or another person) can determine the grant target person and the number to be granted to the grant target person in accordance with a degree of contribution to a company.

Note that another pattern of the trust type share option is a pattern in which a specific grant target person and the number of share options to be granted to the person are provisionally determined, and the trustee 12 accepts trust in a state where right confirmation conditions for causing the grant target person to definitely have a beneficial interest have been set. In this case, the right confirmation conditions are satisfied, and therefore the grant target person becomes a beneficiary of the share option (a second trust).

Note that another pattern of the trust type share option is a pattern in which prior to the arising of beneficiary designation grounds in the first trust, in a case where a response indicating that a specific grant target person is designated as a beneficiary for all of the share options excluding waived share options has not been received, and in a case where there is an intention to designate the specific grant target person as the beneficiary later, the settlor 11 or another settlor forms a new trust (a third trust) by contributing money or the like, and designates the third trust as the beneficiary, and therefore trust assets of the first trust are handed over to the trust. In the second trust, in a case where the specific grant target person does not satisfy the right confirmation conditions, similarly, trust assets can be handed over to the third trust.

Furthermore, the present embodiment targets all of the first trust, the second trust, and the third trust. Stated another way, the trust (i) illustrated in Fig. 1 may be any of the first trust, the second trust, and the third trust. The settlor 11, the trustee 12, the beneficiary 13, the beneficiary designation right holder 14, and the authorized person 21 are respectively a settlor, a trustee, a beneficiary, a beneficiary designation right holder, and an authorized person for each of the first trust, the second trust, and the third trust.

The settlor 11 entrusts a share option to the trustee 12. In the present embodiment, the settlor 11 entrusts money to the trustee 12. In setting this trust, assets in trust are transferred. Therefore, in cases where specified by law, a tax is laid at a predetermined tax rate. Note that the settlor 11 may entrust the share option and money to the trustee 12, and may pay taxes with the money.

Next, the trustee 12 pays the entrusted money as a cost of the share option to the issuing company 10. The issuing company 10 grants, to the trustee 12, a share option at an exercise price that corresponds to a current stock price by a number that corresponds to the paid cost.

Then, the trustee 12 continues to administrate the entrusted share options until beneficiary designation grounds of trust arise or it is confirmed whether or not the right confirmation conditions are fulfilled. Examples of the beneficiary designation grounds of trust include listing of the issuing company 10 that has not yet been listed at the time of setting trust, and the elapse of a predetermined period. Examples of the right confirmation conditions of trust include the registration of executives or the like in a company during a predetermined period, and the obtainment of a certain level or more of evaluation in personnel evaluation. Note that the trustee 12 may exercise the share option by using money contributed from the settlor 11, and may make a change to a stock. Furthermore, a stock may be entrusted rather than the share option or the call option, or money may be entrusted, and the trustee 12 may be caused to acquire the stock. Moreover, virtual currency or fund shares may be entrusted, or money or other assets may be entrusted, and the trustee 12 may be caused to acquire the virtual currency or the fund shares. Furthermore, the trustee 12 may borrow all or part of money from the settlor 11 or another third person.

Note that a settlor of the first trust may be different from a settlor of the second trust or the third trust. A trustee of the first trust (a first trustee), a trustee of the second trust (a second trustee), and a trustee of the third trust (a third trustee) may be different from each other. A beneficiary designation right holder of the first trust (a first beneficiary designation right holder), a beneficiary designation right holder of the second trust (a second beneficiary designation right holder), and a beneficiary designation right holder of the third trust (a third beneficiary designation right holder) may be different from each other. Furthermore, each of the second trust and the third trust may be a single trust, or may be a plurality of trusts.

Then, in a case where the beneficiary designation grounds have arisen in the first trust, the first beneficiary designation right holder can designate specific beneficiaries (first beneficiaries) from the executives or the like, and can hand over the share option to the beneficiaries, or can designate the third trustee as a beneficiary of the first trust, and can hand over the share option to the third trustee. Furthermore, in a case where the right confirmation grounds have not been fulfilled in the second trust, the second trustee may determine another person including the third trustee that has been determined in advance to be the second beneficiary, or may designate the second beneficiary in accordance with directions of the second beneficiary designation right holder. In the second trust, in a case where separately determined beneficiary designation grounds (if any) have expired before it is determined whether or not the right confirmation grounds have been fulfilled, the second trustee may hand over trust assets to the third trustee.

As described above, the share option is handed over to the third trustee, and therefore after the beneficiary designation grounds have arisen in the first trust or the second trust, or after it has been determined that the right confirmation conditions have not been fulfilled in the second trust, similarly, the share option can continue to be granted to future executives or the like. Note that, in cases where specified by law, in some cases, trust assets at a point in time when the beneficiary designation grounds have arisen in the first trust or the second trust, or at a point in time when it has been determined whether or not the right confirmation conditions have been fulfilled in the second trust can be handed over as trust assets of the third trust by a designated amount at a book price at the point in time (handing-over according to book value).

The beneficiary designation right holder 14 may designate a next trustee or the same trustee as a beneficiary in a case where the conditions have not been fulfilled in the second trust or in a case where the beneficiary designation grounds have arisen in the second trust, similarly to a case where the beneficiary designation grounds have arisen in the first trust. In cases where specified by law, in some cases, it is requested that the first trustee be different from the second trustee or the third trustee. Furthermore, in cases where specified by law, in some cases, the first trustee may be the same as the second trustee and the third trustee, if the trustees have a predetermined qualification. The first trustee, the second trustee, and the third trustee may be natural persons, or may be juridical persons. Furthermore, the beneficiary designation right holder in the first trust, the beneficiary designation right holder in the second trust, and the beneficiary designation right holder in the third trust may be different from each other, or may be the same as each other. The beneficiary designation right holder in the first trust, the beneficiary designation right holder in the second trust, and the beneficiary designation right holder in the third trust may be natural persons, or may be juridical persons.

The trustee 12 confirms whether the authorized person 21 will receive financing or make an investment on the basis of capital gains of the share option. In this confirmation, it may only be confirmed whether financing will be received, it may only be confirmed whether an investment will be made, or it may be confirmed whether financing will be received and an investment will be made. Stated another way, the share option administration system 50 according to the present embodiment may be a system that makes trust and a loan, may be a system that makes trust and an investment, or may be a system that makes trust, a loan, and an investment. An operation company that operates the share option administration system 50 described later may carry out confirmation as to financing or an investment. Only in a case where the settlor 11 or the issuing company 10 has allowed confirmation, the trustee 12 or the operation company may be able to carry out confirmation to the authorized person 21. In order to acquire capital gains from the share option serving as trust assets in the first trust or the third trust, it is requested that the authorized person 21 in the first trust sell shares acquired by paying an exercise price of the share option, at a stock market. In addition, in the second trust or a trust for which a beneficiary has been specifically determined and conditions have not been set, similarly, in order to acquire capital gains from the share option serving as trust assets, it is requested that the exercise price be paid. Therefore, it is requested that the authorized person 21 prepare the exercise price. In contrast, in the present embodiment, the authorized person 21 can receive financing of money that corresponds to capital gains in a state where in a trust for which authority of borrowing or investment has been given to the authorized person 21, a share option serving as trust assets has been entrusted to the trustee 12. Financing is provided by the loaner 22. Financing may be provided by the trustee 12 on the basis of the trustee's own property, or may be provided by the operation company of the share option administration system 50 described later. Financing may be provided by a non-bank institution or a banking institution. Furthermore, an actor that receives financing may be the trustee 12 (borrowing is provided as a trustee in trust), may be all or some of the executives or the like, may be a provisional grant target person in the second trust, or may be the authorized person 21. In some cases, an estimated value of capital gains of the share option, a value of security of the share option, an amount of financing, an interest rate or due date, conditions for compulsory payment, or the like vary depending on a loaner that provides financing. Therefore, financing information may be obtained from a plurality of loaners for each financing, or the authorized person 21 may be able to select the loaner 22 from the plurality of loaners. By doing this, the authorized person 21 can make an investment by using, as capital, money that corresponds to capital gains without preparing the exercise price. An investment can be made in the investee 15. It is assumed that an investment according to the present embodiment is, for example, an alternative investment. The alternative investment includes, for example, an investment to a venture company serving as venture capitals, and an international real estate investment. The investment according to the present embodiment may be, for example, corporate acquisition (M & A), may be a domestic real estate investment (including a securitized investment), or may be a derivative investment including the call option, virtual currency, a fund investment, an investment to digital assets, or the like. The share option that is administrated as trust assets by the trustee 12 may be used for right exercise, may be changed to shares, and may be provided as a lending stock or a securities mortgage loan with use purposes unspecified. The authorized person 21 can have an opportunity of such a high-return investment, and therefore the authorized person 21 can have an opportunity of moneymaking before a specific beneficiary of the share option is confirmed, and the share option is delivered to the beneficiary. Note that in a state where the specific beneficiary of the share option has been confirmed, the beneficiary 13 themselves may become the authorized person 21, may receive financing of money according to capital gains without withdrawing the share option from trust, and may make an investment.

For example, in the second trust, in a case where an employee has been designated as a provisional grant target person, and registration in the issuing company 10 during a certain period has been set as conditions for confirmation of the beneficiary, or in other cases, in principle, the share option fails to be exercised to acquire shares, and the shares fail to be sold at a stock market 20 before the employee is confirmed to be the beneficiary. However, according to the present embodiment, for example, an employee serving as a provisional grant target person in the second trust can become the authorized person 21, can receive financing of money on the basis of capital gains of the share option or can cause a trustee to receive financing in trust, and can make an investment by using the money as capital. In this case, the employee maintains a registration state, and can have an opportunity of moneymaking according to capital gains from the share option during a period until the right confirmation conditions are actually fulfilled.

In a case where the authorized person 21 has responded that borrowing or investment will not be carried out, the trustee 12 continues to administrate the share option until the beneficiary designation grounds arise in the first trust or the second trust, or it is determined whether or not the right confirmation conditions have been fulfilled in the second trust. Finally, in a case where a specific beneficiary has been determined, the beneficiary 13 receives delivery of the share option from trust, exercises a right against the issuing company, and pays an exercise price to acquire shares, or pays a right exercise price to the issuing company 10 via trust in a state where the share option continues to be held in trust, and causes the beneficiary of the trust to acquire shares, and sells the shares at the stock market as needed. Alternatively, the beneficiary 13 may receive financing on the basis of capital gains of the share option in a state where the share option continues to be held in trust, and may use the financing for investment. Note that the share option administration system according to the present invention may always continue to provide financing information or investment information to the beneficiary 13, unless the beneficiary 13 withdraws the share option (cancels or terminates trust contract). Note that in Fig. 1, the investment information is illustrated as investee information.

In a case where the authorized person 21 or the beneficiary 13 has received financing, or has responded that an investment will be made, the trustee 12, the operation company of the share option administration system, or the loaner 22 serving as an actor of other financing presents the financing information or an investment item to the authorized person 21 or the beneficiary 13. Examples of information relating to the investment item include the content of assets serving as an investment target, an expected yield, a minimum investment amount, and a maximum investment amount. Furthermore, examples of the financing information in this case include an estimated value of assets serving as an investment target, a value of security, an amount of financing, an interest rate or due date, conditions for compulsory payment for each loaner that provides financing. The authorized person 21 or the beneficiary 13 selects the investee 15, and makes an investment. In some cases, as the investee 15, a person or a company in which an investment is made does not exist, and the investee 15 is investment target assets such as real estate. In this case, funds of investment may be separately prepared by the authorized person 21 or the beneficiary 13 themselves, or may receive financing of money that corresponds to capital gains of a share option serving as trust assets of a trust for which authority of financing or investment has been given to the authorized person 21, or a share option that has been granted to the beneficiary 13. Financing may be received on security of assets serving as an investment target. In some cases, an estimated value or a value of security of investment target assets, an amount of financing, an interest rate or due date, conditions for compulsory payment, or the like vary depending on the loaner 22 that provides financing. Therefore, financing information may be obtained from a plurality of loaners for each financing, or the authorized person 21 or the beneficiary 13 may be able to select the loaner from the plurality of loaners. In both cases, the share option remains entrusted to the trustee 12. Note that in a case where financing of money that corresponds to capital gains of the share option is provided to the authorized person 21 or the beneficiary 13, security interests are established for the share option. Furthermore, the share option or the alternative investment handled in the present system have high volatility. Therefore, in order to avoid a situation where financed money fails to be recovered, it is desirable that security interests be established against investment target assets themselves that the authorized person 21 or the beneficiary 13 had made an investment in. In general, it is conceivable that, even if security has been established for the investment target, non-bank institutions or financial institutions that provide financing of the total amount of funds for a certain investment infrequently can put credit into effect by taking capital gains of such a share option on security. In some cases, an estimated value of capital gains of the share option, a value of security of the share option, an estimated value or a value of security of investment target assets, an amount of financing under the assumption that both are given in security, an interest rate or due date, conditions for compulsory payment, or the like vary depending on a loaner that provides financing. Therefore, information relating to the share option or information relating to the investment target assets may be provided from a plurality of loaners for each financing, and financing information may be obtained, or the authorized person 21 or the beneficiary 13 may be able to select the loaner 22 from the plurality of loaners.

In a case where the authorized person 21 or the beneficiary 13 has received financing on the basis of the capital gains of the share option in trust assets, if financing has not been received from the trustee 12, this means that the share option in the trust assets has been provided in security for a third party. Furthermore, if financing has been received from the trustee 12, money is recorded as assets in the trust assets, and a debt is also recorded. In a case where an investment has been made, investment target assets are recorded instead of money.

Furthermore, after financing or investment has been carried out according to directions of the authorized person 21, in a case where the beneficiary designation grounds have arisen in the first trust or the second trust, and the beneficiary has been designated, or in a case where a person other than a provisional grant target person has become the beneficiary due to non-fulfillment of the right confirmation conditions in the second trust, the trustee 12 can hand over the share option, money, an investment target, and a debt that serve as trust assets to a next beneficiary (including the third beneficiary) according to a book value. Furthermore, while such financing has been cleared off, the trustee 12 may prohibit the settlor 11, the beneficiary designation right holder 14, or the authorized person 21 from waiving the share option that has been given in security.

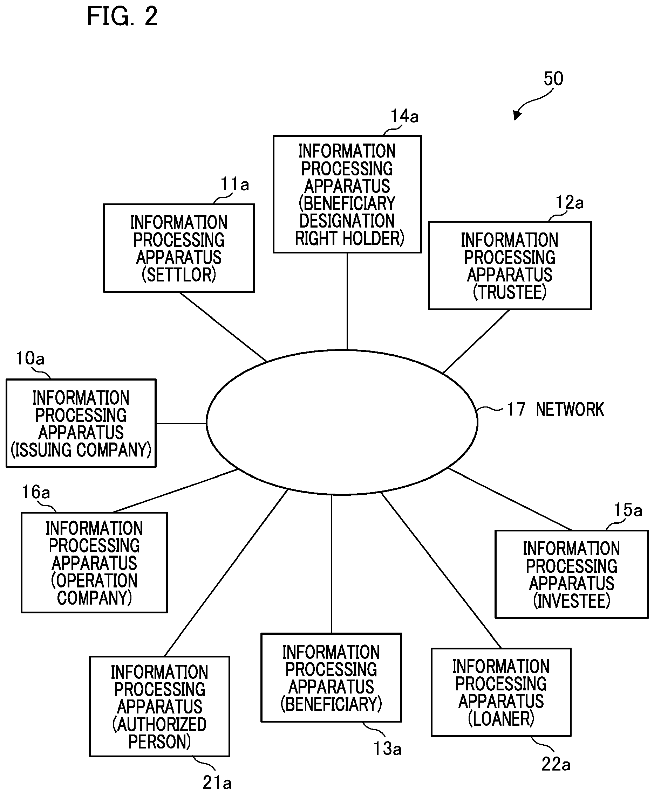

Fig. 2 is a block diagram illustrating a general configuration of the share option administration system 50 according to the first embodiment of the present invention. The share option administration system 50 according to the present embodiment includes information processing apparatuses 10a, 11a, 12a, 13a, 14a, 15a, 16a, 21a, and 22a that are connected to each other via a network 17. The share option administration system 50 administrates a trust of a share option. The share option administration system 50 achieves the scheme described with reference to Fig. 1.

The information processing apparatus 10a is an information processing apparatus that is operated by a person in charge of the issuing company 10. The information processing apparatus 11a is an information processing apparatus that is operated by the settlor 11. The information processing apparatus 12a is an information processing apparatus that is operated by the trustee 12. The information processing apparatus 13a is an information processing apparatus that is operated by the beneficiary 13. The information processing apparatus 14a is an information processing apparatus that is operated by the beneficiary designation right holder 14. A beneficiary designation right holder may be different for each trust, such as the first trust, the second trust, or the third trust, or may be the same. Here, the beneficiary designation right holder 14 represents these beneficiary designation right holders. The information processing apparatus 15a is an information processing apparatus that is operated by a person in charge of the investee 15. The information processing apparatus 16a is an information processing apparatus that is operated by a person in charge of an operation company that operates the share option administration system 50. The information processing apparatus 21a is an information processing apparatus that is operated by the authorized person 21. The information processing apparatus 22a is an information processing apparatus that is operated by the loaner 22. As the network 17, for example, the Internet is used. It does not matter if it is a wired or wireless type, and any known network can also be used. In some cases, the share option administration system 50 may have a configuration in which at least any of the information processing apparatuses 10a, 11a, 12a, 13a, 14a, 15a, 16a, 21a, and 22a is omitted. The share option administration system 50 may include an information processing apparatus other than the information processing apparatuses 10a, 11a, 12a, 13a, 14a, 15a, 16a, 21a, and 22a.

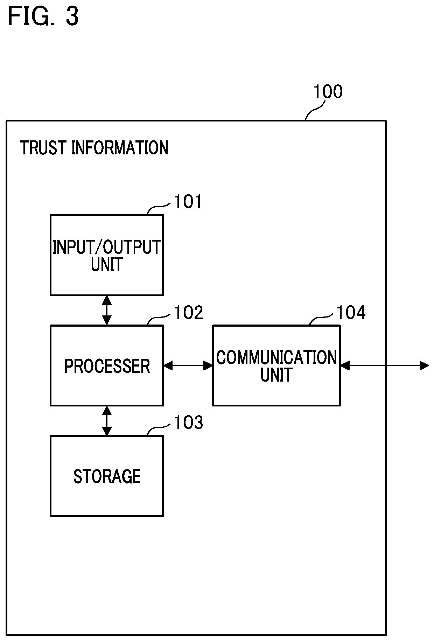

Fig. 3 is a block diagram illustrating a configuration of each of the information processing apparatuses illustrated in Fig. 2. In Fig. 3, the configurations of the information processing apparatuses 10a, 11a, 12a, 13a, 14a, 15a, 16a, 21a, and 22a illustrated in Fig. 2 are illustrated as a configuration of an information processing apparatus 100. The information processing apparatus 100 is at least one of the information processing apparatuses 10a, 11a, 12a, 13a, 14a, 15a, 16a, 21a, and 22a. Each of the information processing apparatuses 10a, 11a, 12a, 13a, 14a, 15a, 16a, 21a, and 22a may have the same configuration, or each of the information processing apparatuses may have a configuration that is different from a configuration of another information processing apparatus.

The information processing apparatus 100 includes a processor 102 that performs various types of processing, an input/output unit 101 that performs an input or an output from/to an operator, a storage 103 that stores various types of data, and a communication unit 104 that performs communication via the network 17. The information processing apparatus 100 is a computer. The information processing apparatus 100 may be any computer. The information processing apparatus 100 may be an apparatus that is generally called a personal computer, or may be an apparatus that is called a super computer. Furthermore, the information processing apparatus 100 may be an apparatus that is called a smartphone or a tablet. The processor 102 is an arithmetic apparatus that is called a CPU or an MPU. The processor 102 executes a program stored in the storage 103. The processor 102 stores various types of data relating to information processing in the storage 103. Registration performed by the information processing apparatus 100 of information corresponds to storage performed by the processor 102 of the information in the storage 103. The storage 103 may be any known storage device such as a RAM or a ROM, a magnetic storage device, or an optical storage device. The input/output unit 101 is an input/output device such as a keyboard, a mouse, or a display. The processor 102 performs information processing in accordance with information that has been input from an operator via the input/output unit 101. Furthermore, the processor 102 performs information processing in accordance with information that has been input via the communication unit 104.

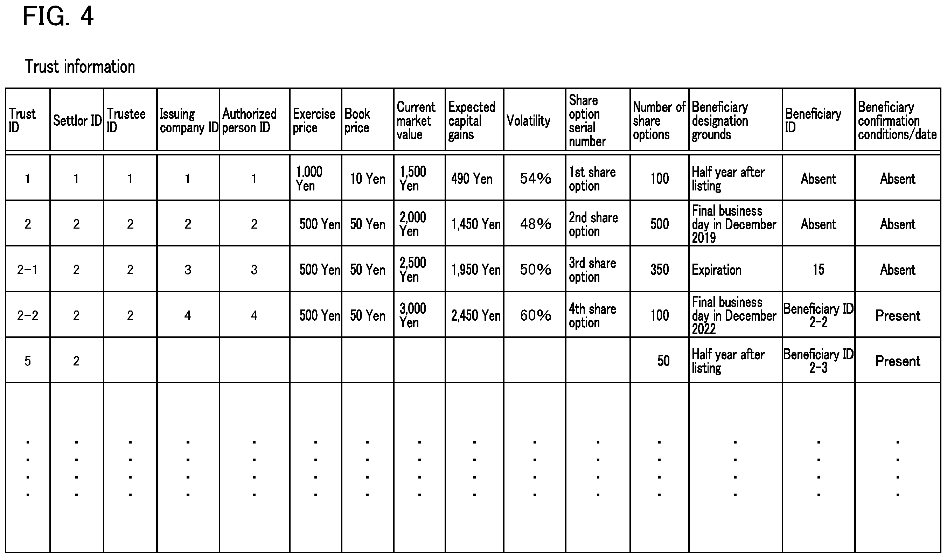

Fig. 4 is a diagram illustrating an example of trust information that is stored in the storage 103 of the information processing apparatus 16a illustrated in Fig. 2. In the present embodiment, the trust information is stored in the information processing apparatus 16a that is operated by a person in charge of the operation company that operates the share option administration system 50. The trust information may be stored in another information processing apparatus.

The share option administration system 50 can administrate a trust of a share option in a state where a beneficiary has been determined. A trust ID included in the trust information is an ID that can specify each trust, and is uniquely allocated to each of the trusts. A settlor ID included in the trust information is an ID that can specify a settlor of a corresponding trust. A trustee ID included in the trust information is an ID that can specify a trustee of a corresponding trust. An issuing company ID included in the trust information is an ID that can specify an issuing company that issues a share option of a corresponding trust. An authorized person ID included in the trust information is an ID that can specify an authorized person of a corresponding trust. The trust information may include authorized person information, which is information relating to the authorized person. The authorized person information includes the authorized person ID. An exercise price included in the trust information is an exercise price of a share option of a corresponding trust. Beneficiary designation grounds included in the trust information are an event or date in which or when a beneficiary of a corresponding trust is designated. A book price included in the trust information is a payment value of a share option that a trustee of a corresponding trust has paid in receiving grant of the share option, the market value of the share option at a time when the trustee of the corresponding trust receives trust of the share option, or the like. Current market value included in the trust information is a current price of shares acquired by exercising a share option serving as trust assets of a corresponding trust. Expected capital gains included in the trust information are expected capital gains of shares acquired by exercising a share option serving as trust assets of a corresponding trust. Volatility included in the trust information is volatility (a stock price fluctuation rate) of shares acquired by exercising a share option serving as trust assets of a corresponding trust. In a case where the stock has not been listed, volatility of a similar business type is displayed in some cases. A share option serial number included in the trust information is a serial number of a share option serving as trust assets of a corresponding trust. The number of share options included in the trust information is the number of share options serving as trust assets of a corresponding trust. Beneficiary information included in the trust information is information relating to a beneficiary of a share option of a corresponding trust. A beneficiary ID included in the beneficiary information is an ID that can specify the beneficiary. The number of share options included in the beneficiary information is the number of share options granted to the beneficiary. Furthermore, in a case where the beneficiary has not been confirmed, the number of share options is the number of share options that are held in trust by using a corresponding trust ID. Beneficiary confirmation conditions/date included in the trust information are the presence/absence of beneficiary confirmation conditions or date of confirmation of a beneficiary of a corresponding trust.

A record having the trust ID "1" in Fig. 4 is a record of a trust in which a beneficiary is simultaneously and collectively designated for all of the share options that have been entrusted when the beneficiary designation grounds have arisen (hereinafter referred to as a "collective delivery type trust"). Normally, in the entrusted share option, a beneficiary does not exist until the beneficiary designation grounds arise. In this case, the trust is of a beneficiary unspecified type.

A record having the trust ID "2" in Fig. 4 is a record of a trust in which entrusting a share option and entrusting the share option again after the beneficiary designation grounds have arisen are repeated (hereinafter referred to as a "multiplex trust"). In some cases, the content of the multiplex trust is initially the same as the content of the collective delivery type trust, excluding a characteristic in which the beneficiary designation grounds are linked at prescribed date. In this case, the trust is of a beneficiary unspecified type.

A record having the trust ID "2-1" in Fig. 4 is a record of the multiplex trust, and is a record for a beneficiary that has been confirmed after the arising of the beneficiary designation grounds. This record indicates a pattern in which the beneficiary designation grounds have expired in the multiplex trust, and a pattern in which the beneficiary has been determined, and the trust has not been terminated.

A record having the trust ID "2-2" in Fig. 4 is a record of the multiplex trust, and is a record for the second trust that has taken over the share option from a trust in which the beneficiary designation grounds have arisen. In this record, the issuing company ID, the exercise price, the book price, and the serial number of the share option are handed over from the first trust. As the number of share options, the number of share options to be handed over is registered.

In the trust information, in a case where the beneficiary has not been confirmed, and a granted person has been provisionally determined, provisional information is registered in a beneficiary field. The trustee is registered as the beneficiary, the trust is deemed to be the third trust, the record is shifted to the third trust, a beneficiary of the third trust is determined to be a grant target person, and conditions and due date of confirmation of the beneficiary are registered.

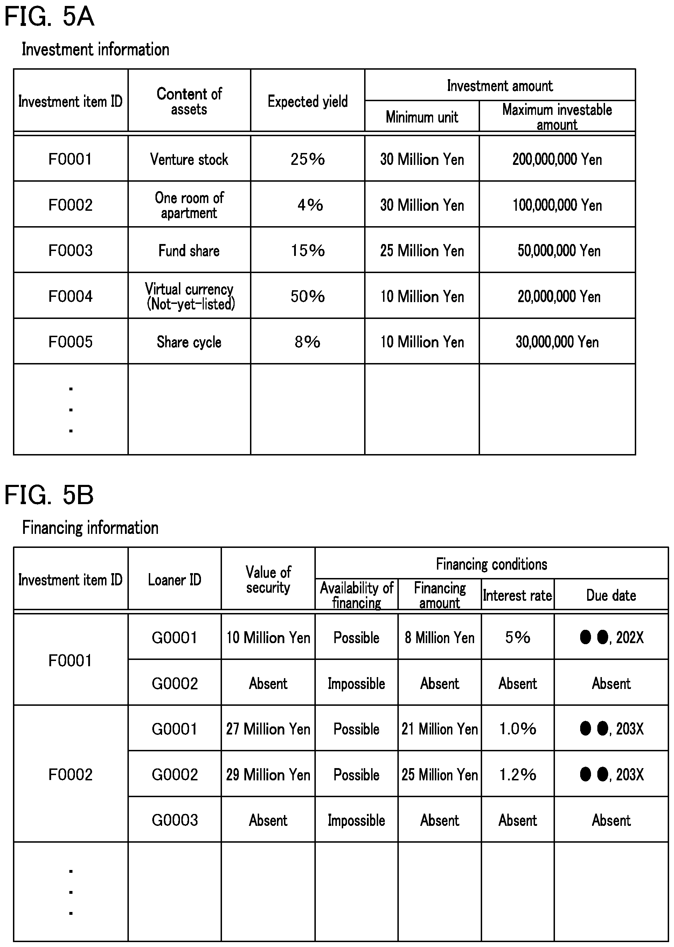

Fig. 5(A) is a diagram illustrating an example of investment information stored in the storage 103 of the information processing apparatus 16a illustrated in Fig. 2. In the present embodiment, the investment information is stored in the information processing apparatus 16a that is operated by a person in charge of the operation company that operates the share option administration system 50. The investment information may be stored in another information processing apparatus.

An investment item ID included in the investment information is an ID that can specify each investment item, and is uniquely allocated to each of the investment items. The content of assets included in the investment information is the content of investment target assets of a corresponding investment item. The content of assets included in the investment information may include information relating to a company or a person that receives investment. An expected yield included in the investment information is an expected yield of a corresponding investment item. The trust information includes investment amount information, which is information relating to an investment amount of a corresponding investment item. A minimum unit included in the investment amount information is a minimum unit in the case of investing in a corresponding investment item. A maximum investment amount included in the investment amount information is a maximum amount that can be invested in a corresponding investment item. The investment information may include more detailed investment conditions for each of the investment items. The investment amount is an example of the investment conditions. The investment item included in the investment information includes an item relating to the alternative investment.

Fig. 5(B) is a diagram illustrating an example of financing information stored in the storage 103 of the information processing apparatus 16a illustrated in Fig. 2. In the present embodiment, the financing information is stored in the information processing apparatus 16a that is operated by a person in charge of the operation company that operates the share option administration system 50. The investment information may be stored in another information processing apparatus.

An investment item ID included in the financing information is an ID that is linked to the investment item ID of the investment information of Fig. 5(A). A loaner ID included in the financing information is an ID that can specify a loaner that makes a loan in the case of investing in an investment item specified by the investment item ID. A combination of the investment item ID and the loaner ID specifies a financing item. A value of security included in the financing information is a value of security of investment target assets of the investment item specified by the investment item ID. The financing information includes financing conditions information, which is information relating to financing conditions of a corresponding investment item. Financing availability included in the financing conditions information indicates the availability of financing in the case of investing in a corresponding investment item. A financing amount included in the financing conditions information indicates an amount that can be financed in the case of investing in a corresponding investment item. An interest rate included in the financing conditions information indicates an interest rate in the case of investing in a corresponding investment item. Due date included in the financing conditions information indicates payment due date of financing in the case of investing in a corresponding investment item. The financing information may include more detailed financing conditions for each of the financing items. The financing amount is an example of the financing conditions.

Note that the financing information may include a trust ID, which is an ID that is linked to the trust ID in the trust information of Fig. 4. In this case, a combination of the trust ID, the investment item ID, and the loaner ID may specify a financing item. Furthermore, in this case, the loaner 22 may determine financing conditions in a case where trust assets of a trust that is specified by the trust ID included in the financing information are added to security of financing, and these financing conditions may be included in the financing information of Fig. 5(B).

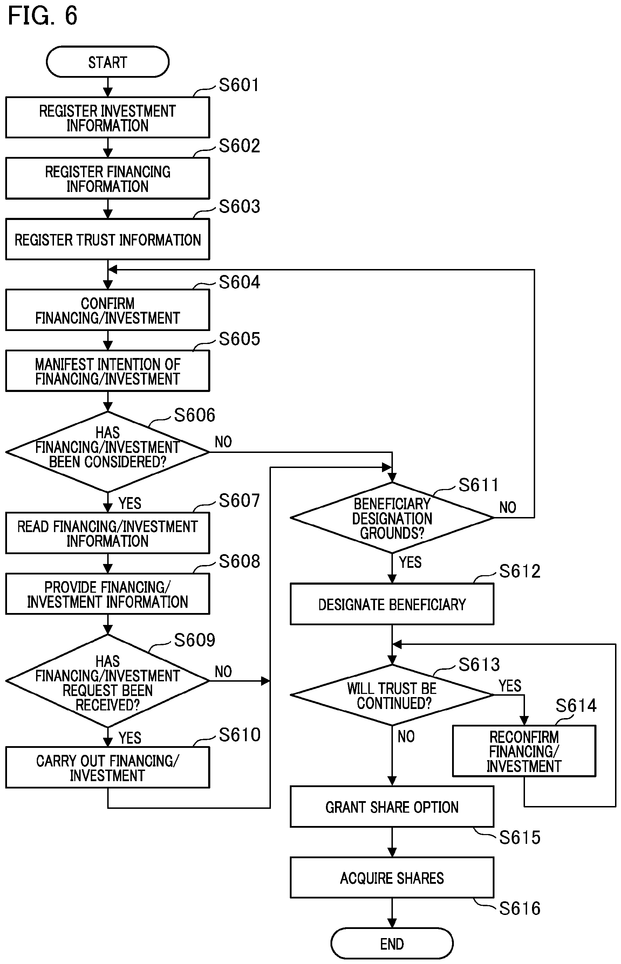

An operation of the share option administration system 50 according to the present embodiment is described below. Fig. 6 is a flowchart illustrating processing performed by the share option administration system 50. The processing performed by the share option administration system 50 may be performed by the information processing apparatuses 10a, 11a, 12a, 13a, 14a, 15a, 16a, 21a, and 22a illustrated in Fig. 2 in a distributed manner. Furthermore, for example, the information processing apparatuses other than the information processing apparatus 16a may be used as an information input/output terminal apparatus, and the information processing apparatus 16a may perform information processing, and may store information. In the present embodiment, the information processing apparatus 16a performs information processing, stores information, and provides the other information processing apparatuses with a user interface of an input/output of information via the network 17.

The information processing apparatus 16a issues, in advance, each of the IDs included in the trust information illustrated in Fig. 4, the investment information illustrated in Fig. 5(A), and the financing information illustrated in Fig. 5(B), and registers the IDs.

In step S601 of Fig. 6, the information processing apparatus 16a registers each information of the investment information of Fig. 5(A) as investment information in response to the occurrence of an investment item. The information processing apparatus 16a may receive the investment information from the information processing apparatus 15a, and may store the investment information in the storage 103. In step S602, the information processing apparatus 16a registers each information of the financing information of Fig. 5(B) investment information in response to the occurrence of a financing item. The information processing apparatus 16a may receive the financing information from the information processing apparatus 22a, and may store the financing information in the storage 103. In step S603, the information processing apparatus 16a registers each information of the trust information of Fig. 4 as trust information in response to the occurrence of trust. At this time, "not yet determined" is registered as a right exercise period and beneficiary information in the trust information, in a case where the right exercise period and the beneficiary information have not been determined. Later, the information processing apparatus 16a registers the right exercise period and the beneficiary information at a point in time when the right exercise period and the beneficiary information have been determined. The information processing apparatus 16a may perform processing for calculating a fee for trust, and charging a settlor while the trust is continued.

In step S604, the information processing apparatus 16a inquires of the authorized person 21 an intention to receive financing or make an investment (transmits data of an inquiry to the information processing apparatus 21a). In step S605, the information processing apparatus 16a receives the intention of the authorized person 21 (receives data of intention manifestation from the information processing apparatus 21a).

In step S606, in a case where the intention received in step S605 does not indicate that financing or investment will be considered, the processing of the information processing apparatus 16a moves on to step S611. In step S606, in a case where the intention received in step S605 indicates that financing or investment will be considered, the processing of the information processing apparatus 16a moves on to step S607.

In step S607, the information processing apparatus 16a reads the investment item included in the investment information of Fig. 5(A), and the financing item included in the financing information of Fig. 5(B). At this time, the information processing apparatus 16a may narrow an investment item or financing item to be read in accordance with an amount of capital gains arising from a share option of trust assets of this time. Next, in step S608, the information processing apparatus 16a provides the authorized person 21 with the financing item and the investment item that have been read in step S607 (transmits data of the financing information and the investment information to the information processing apparatus 21a).

In step S609, the information processing apparatus 16a determines whether an investment request has been received from the beneficiary 13. In a case where the investment request has not been received from the authorized person 21 (for example, in a case where a response has not been received during a predetermined period, or in a case where expression of an intention to not make an investment has been received), the processing of the information processing apparatus 16a moves on to step S611. In step S609, in a case where the investment request has been received from the authorized person 21, the processing of the information processing apparatus 16a moves on to step S610. In step S610, the information processing apparatus 16a carries out financing or investment. In this process, specifically, the information processing apparatus 16a reports, to the loaner 22 or the investee 15, that the authorized person 21 has an intention of financing and investment. Then, the loaner 22 or the investee 15 and the authorized person 21 may proceed with discussion of financing or investment outside the administration of the share option administration system 50, or by performing the process of step S610, it may be deemed that a contract of investment has been concluded. Then, the processing of the information processing apparatus 16a moves on to S611.

In step S611, the information processing apparatus 16a makes a determination as to the beneficiary designation grounds for the trust. Examples of the beneficiary designation grounds include listing of the issuing company 10 that has not yet been listed at the time of setting a trust and the elapse of a predetermined period. If the beneficiary designation grounds have not arisen, the processing of the information processing apparatus 16a returns to step S604, and the processes are repeated. If the beneficiary designation grounds have arisen, the processing of the information processing apparatus 16a moves on to step S612.

In step S612, the information processing apparatus 16a designates the beneficiary for the trust. The information processing apparatus 16a inquires, for example, of the beneficiary designation right holder 14 (for example, the information processing apparatus 14a operated by the beneficiary designation right holder 14) designation of the beneficiary. In a case where the beneficiary will be designated for all or some of share options, the beneficiary designation right holder 14 that has received an inquiry inputs a beneficiary to be designated to the information processing apparatus 14a, and the information processing apparatus 16a that has received this input registers the beneficiary in the beneficiary information included in the trust information of the trust. In a case where the beneficiary will not be designated, the beneficiary designation right holder 14 inputs this fact to the information processing apparatus 14a, and the information processing apparatus 16a that has received this input can establish trust again. From among share options relating to the trust, for all of the share options, the beneficiary may be designated, or designation of the beneficiary may be omitted. The beneficiary may be designated for some of the share options, and designation of the beneficiary may be omitted for the other share options.

In step S613, the information processing apparatus 16a inquires whether the trust will be continued. The information processing apparatus 16a inquires, for example, of the beneficiary 13 (for example, the information processing apparatus 13a operated by the beneficiary 13) whether the trust will be continued, and the beneficiary 13 that has received an inquiry responds whether the trust will be continued. In a case where a response from the beneficiary 13 indicates that the trust will be continued, the processing of the information processing apparatus 16a moves on to step S614. In a case where the response from the beneficiary 13 indicates that the trust will not be continued (for example, in a case where the beneficiary 13 has desired to withdraw the share option), the processing moves on to step S615.

In step S614, the information processing apparatus 16a confirms the beneficiary 13's intention of financing or investment, provides financing or investment information, and carries out financing or investment, similarly to the processes of steps S604 to S610 described above. In step S614, in both a case where financing or investment has been carried out and a case where financing or investment has not been carried out, the processing of the information processing apparatus 16a returns to step S613, and the processing is continued.

In step S615, the information processing apparatus 16a grants the share option to the beneficiary 13. In this process, specifically, the information processing apparatus 16a reports, to the trustee 12, that the share option will be granted to the beneficiary 13. In step S615, the information processing apparatus 16a registers the grant of the share option and the termination of trust for a trust for which termination grounds have arisen this time, for example, in the trust information. In a case where the beneficiary 13 has exercised the share option, and has acquired shares, the information processing apparatus 16a may register this fact in the trust information, and may terminate the processing (S616).

In providing financing, the share option administration system 50 may establish security interests on the share option. Furthermore, in financing, the share option administration system 50 may also establish security interests on an investment target that the beneficiary 13 has invested in.

Furthermore, the share option administration system 50 may always monitor the market value of a stock or an alternative investment serving as a target of the share option, and may establish an assessment rate. In the case of falling below par of security, an ownership of the stock or the alternative investment serving as the target of the share option may be transferred from the beneficiary to a person that has provided financing.
(1) Note that the present invention is an information processing apparatus including: storage means for storing trust information, investment information, and financing information, the trust information being information relating to a share option that has been entrusted from a settlor to a trustee, the investment information being information relating to an investment item, the financing information being information relating to financing of money to be invested in the investment item; reading means for reading authorized person information, the investment information that has been stored in the storage means, and the financing investment information that has been stored in the storage means, the authorized person information being included in the trust information that has been stored in the storage means, the authorized person information being information relating to an authorized person that has authority that enables borrowing or investment to be carried out on security of the share option; inquiry means for inquiring of the authorized person whether the borrowing or the investment will be carried out, the authorized person being specified by an authorized person ID included in the authorized person information that has been read by the reading means; response reception means for receiving a response to an inquiry that has been made by the inquiry means; and information provision means for providing the financing information or the investment information that has been read by the reading means, to the authorized person that has made the response that has been received by the response reception means, the response indicating that the borrowing or the investment will be carried out. This enables an opportunity of investment to be provided to a beneficiary of the share option, and therefore the utilization of assets in trust can be improved.
(2) Furthermore, according to the present invention, the trust information includes information relating to the number of share options for which the authority is had by each of the authorized persons that is associated with the authorized person ID, and the investment information includes information that corresponds to the number of share options for which the authority is had by the authorized person. This can propose an appropriate investment to the beneficiary of the share option, and the utilization of assets in trust can be improved.
(3) Furthermore, according to the present invention, investment means for carrying out the investment indicated by the investment information is further included. This enables an opportunity of investment to be provided to the beneficiary of the share option, and therefore the use of the share option can be improved.
(4) Furthermore, according to the present invention, financing means for providing the authorized person with the financing of funds that correspond to the number of share options for which the authority is had by the authorized person is further included, and the investment means invests the funds of the financing provided by the financing means. This enables the beneficiary to prepare funds required for an investment without exercising the share option and selling shares, and the utilization of assets in trust can be improved.
(5) Furthermore, according to the present invention, grant means for granting, to the beneficiary, the share option that has been distributed, in a case where the beneficiary has desired to withdraw the share option is further included. This enables processing to be performed according to an intention of the beneficiary, and the utilization of assets in trust can be improved.
(6) Furthermore, according to the present invention, the investment information includes information relating to an alternative investment. This enables the beneficiary to make an investment that earns a great return according to an amount of capital gains of the share option, and the utilization of assets in trust can be improved.

Preferred embodiments of the present invention have been described above, but the present invention is not limited to these embodiments, and various variations and modifications can be made within the spirit of the present invention. These embodiments and their variations are included in the scope and spirit of the invention, and are also included in the scope of the invention described in the claims and its equivalents.

The present application claims the benefit of priority of Japanese Patent Application No. 2020-143328 filed on August 27, 2020, the entire contents of which are incorporated herein by reference.

### Reference Signs List

- 10: Issuing company
- 11: Settlor
- 12: Trustee
- 13: Beneficiary
- 14: Beneficiary designation right holder
- 15: Investee
- 22: Loaner

## Claims

1. An information processing apparatus comprising:
storage means for storing trust information, investment information, and financing information, the trust information being information relating to a share option that has been entrusted from a settlor to a trustee, the investment information being information relating to an investment item, the financing information being information relating to financing of money to be invested in the investment item;
reading means for reading authorized person information, the investment information that has been stored in the storage means, and the financing investment information that has been stored in the storage means, the authorized person information being included in the trust information that has been stored in the storage means, the authorized person information being information relating to an authorized person that has authority that enables borrowing or investment to be carried out on security of the share option;
inquiry means for inquiring of the authorized person whether the borrowing or the investment will be carried out, the authorized person being specified by an authorized person ID included in the authorized person information that has been read by the reading means;
response reception means for receiving a response to an inquiry that has been made by the inquiry means; and
information provision means for providing the financing information or the investment information that has been read by the reading means, to the authorized person that has made the response that has been received by the response reception means, the response indicating that the borrowing or the investment will be carried out.

2. The information processing apparatus according to claim 1, wherein
the trust information includes information relating to a number of a plurality of the share options for which the authority is had by each of a plurality of the authorized persons that is associated with the authorized person ID, and
the investment information includes information that corresponds to the number of the plurality of the share options for which the authority is had by the authorized person.

3. The information processing apparatus according to claim 2, further comprising
investment means for carrying out the investment indicated by the investment information.

4. The information processing apparatus according to claim 3, further comprising
financing means for providing the authorized person with the financing of funds that correspond to the number of the plurality of the share options for which the authority is had by the authorized person,
wherein the investment means invests the funds of the financing provided by the financing means.

5. The information processing apparatus according to any one of claims 1 to 4, further comprising
grant means for granting, to a beneficiary, the share option that has been distributed, in a case where the beneficiary has desired to withdraw the share option.

6. The information processing apparatus according to any one of claims 1 to 5, wherein
the investment information includes information relating to an alternative investment.

7. A control method of an information processing apparatus, the control method comprising:
a storage process of storing trust information, investment information, and financing information, the trust information being information relating to a share option that has been entrusted from a settlor to a trustee, the investment information being information relating to an investment item, the financing information being information relating to financing of money to be invested in the investment item;
a reading process of reading authorized person information, the investment information that has been stored in the storage process, and the financing investment information that has been stored in the storage process, the authorized person information being included in the trust information that has been stored in the storage process, the authorized person information being information relating to an authorized person that has authority that enables borrowing or investment to be carried out on security of the share option;
an inquiry process of inquiring of the authorized person whether the borrowing or the investment will be carried out, the authorized person being specified by an authorized person ID included in the authorized person information that has been read in the reading process;
a response reception process of receiving a response to an inquiry that has been made in the inquiry process; and
an information provision process of providing the financing information or the investment information that has been read in the reading process, to the authorized person that has made the response that has been received in the response reception process, the response indicating that the borrowing or the investment will be carried out.

8. A program that causes a computer to function as each means included in the information processing apparatus according to any one of claims 1 to 6.
